(19) Europäisches Patentamt

European Patent Office

Office européen des brevets

(11) **EP 1 106 136 B1**

(12) **EUROPEAN PATENT SPECIFICATION**

(45) Date of publication and mention
of the grant of the patent:
**04.10.2006 Bulletin 2006/40**

(21) Application number: **00911363.0**

(22) Date of filing: **24.03.2000**

(51) Int Cl.:
**A47L 25/00** (2006.01)

(86) International application number:
**PCT/JP2000/001837**

(87) International publication number:
**WO 2000/057765 (05.10.2000 Gazette 2000/40)**

(54) **CLEANING SHEET**

REINIGUNGSTUCH

FEUILLE DE NETTOYAGE

(84) Designated Contracting States:
**BE DE FR NL**

(30) Priority: **26.03.1999 JP 8451399**

(43) Date of publication of application:
**13.06.2001 Bulletin 2001/24**

(73) Proprietor: **OJI PAPER CO., LTD.**
**Tokyo 104-0061 (JP)**

(72) Inventors:
• **MINAMI, Shinji**
**Utsunomiya-shi, Tochigi 321-0901 (JP)**

• **SUZUKI, Kenji**
**Utsunomiya-shi, Tochigi 321-0984 (JP)**

(74) Representative: **Ritthaler, Wolfgang**
**Winter, Brandl, Fürniss, Hübner,**
**Röss, Kaiser, Polte**
**Partnerschaft**
**Patent- und Rechtsanwaltskanzlei**
**Alois-Steinecker-Strasse 22**
**85354 Freising (DE)**

(56) References cited:
**JP-A- 2 070 440**    **JP-A- 6 274 072**
**JP-A- 58 082 287**    **JP-U- 61 085 873**

**Description**

TECHNICAL FIELD

The present invention relates to a cleaning sheet and, more specifically, the present invention relates to a cleaning sheet which can efficiently remove paper dust, dirt and the like adhering to a member such as rubber roller for transporting paper, film or the like in an image forming apparatus such as printer and facsimile or in an apparatus for processing a magnetic card such as telephone card and ticket, and which can smoothly move within the apparatus.

BACKGROUND ART

In an image forming apparatus such as word processor, facsimile, copying machine and various OA printers and in an apparatus for processing a magnetic card such as telephone card and ticket, the matter to be transported such as paper, film and card is transported using the friction with transportation means such as rubber roller or rubber belt. When paper dust, oil or dirt adheres to the transportation means such as rubber roller, the friction between the matter to be transported and the transportation means decreases to cause problems such as transportation failure and, for example, printing does not register due to the slippage of transportation pitch or the paper jams. Furthermore, impurities adhere to the image forming apparatus or magnetic card-treating apparatus to generate flaws which often give rise to a failure of the apparatus.

The impurities can be removed by disassembling the transportation means and cleaning the rubber roller or the like, however, the disassembling, cleaning and reassembling take a time and, for practicing this cleaning operation, professional knowledge on the transportation means is required. Accordingly, a general user cannot perform the daily maintenance of the transportation means.

To cope with this, a simple and easy cleaning method has been proposed, for example, Japanese Unexamined Utility Model Publication (Jikkai) No. 5-90608 discloses a method of impregnating a cleaning solution (e.g., acetone, ethanol) into a cleaning sheet having a surface layer formed of a material having absorption suitability, such as non-woven fabric or cloth, and passing the cleaning sheet through the transportation means.

However, according to this method of impregnating a cleaning solution (e.g., acetone, ethanol) into a cleaning sheet having a surface layer formed of a material having absorption suitability, such as non-woven fabric or cloth, and passing the cleaning sheet through the transportation means, if the cleaning solution is impregnated in excess, the cleaning solution may adhere to and remain in the transportation means and in turn adhere to plastics (for example, polystyrene which is liable to dissolve in the cleaning solution) used for the substrate circuit or transportation path within the transportation means, and this may cause deformation or damage of the transportation means. Furthermore, even if the soil of the roller is wiped off with the cleaning solution and transferred onto the cleaning sheet, a problem is still present in that the soil may be transferred to other portion of the transportation means on contacting of the cleaning sheet bearing the soil with that other part during the transportation after the wiping off.

Japanese Examined Patent Publication (Kokoku) No. 01-25064, Japanese Unexamined Utility Model Publication (Jikkai) No. 61-85873 and Japanese Unexamined Patent Publication (Kokai) No. 02-70440 disclose a method of passing a cleaning sheet having provided on one surface or both surfaces thereof a self-adhesive layer through the transportation means and thereby removing the paper dust or dirt adhering to a rubber roller.

According to this method, a cleaning sheet having provided on one surface or both surfaces thereof a self-adhesive layer is passed through the transportation means and thereby the paper dust or dirt adhering to a rubber roller is adhered to and removed by the self-adhesive layer. However, if the adhesive strength of the self-adhesive layer is excessively high, the cleaning sheet may wind itself round the rubber roller (jamming) or when the self-adhesive layer of the cleaning sheet comes into contact with a fixing member such as a guide plate disposed in the transportation path, the self-adhesive agent may adhere to the fixing member to generate a problem such as paper jamming. On the other hand, if the adhesive strength of the self-adhesive layer is too low, the cleaning sheet obtained has no problem in the smooth passing property but disadvantageously, the capability of removing dirt is low or the cleaning efficiency decreases. Thus, conventional cleaning sheets with a self-adhesive layer is not satisfactory as a cleaning sheet having both the smooth passing property and the dust-removing property sufficiently high to allow the practical use.

Japanese Unexamined Utility Model Publication (Jikkai) No. 61-135839 and Japanese Unexamined Patent Publication (Kokai) Nos. 9-29191 and 10-97710 disclose a cleaning sheet where a grid- or net-like low pressure-sensitive adhesive screen layer is superposed on the surface of a self-adhesive layer having high adhesive property. When this cleaning sheet is used in a printer which transports a sheet by holding the sheet between two rollers, the cleaning sheet is kept non-tacky in the non-pressurizing state and moves smoothly but on passing between the transportation rollers for holding the sheet, the screen layer on the self-adhesive layer is buried in the self-adhesive layer and the tacky adhesion is exhibited, whereby the paper dust, dirt or the like adhering to the rubber rollers can be removed.

This cleaning sheet with a screen layer is effective in a printer which transports the sheet by holding it between two rollers in the pressurizing state, however, in the case of transporting the sheet by one rubber roller, the cleaning sheet is not pressurized and cannot exhibit a capability of removing dust and dirt. In addition, the cleaning sheet is pressure-sensitive, therefore, when the sheet is pressurized during storage of the product, the self-adhesive layer undergoes plastic deformation and the screen layer is buried in the self-adhesive layer, as a result, the cleaning sheet cannot exert its original capability.

DISCLOSURE OF THE INVENTION

The object of the present invention is to provide a cleaning sheet for use in a recording apparatus or a magnetic card-treating apparatus, which can remove, with high efficiency, soil on the means for transporting paper, film, card and the like, can smoothly move within the transportation means, and is free of a reverse transfer of the removed soil to a member within the transportation means.

The cleaning sheet of the present invention comprises a substrate sheet, a self-adhesive layer having a low pressure-sensitive adhesive property formed on one surface of the substrate, and a release sheet laminated and detachably attached to the self-adhesive layer, wherein

the self-adhesive layer having a low pressure-sensitive adhesive property has:

(1) a probe tack value of 0.196133 to 1.96133 N (20 to 200 gf), determined in accordance with JIS Z 0237, Information Reference, 5. Probe Tack Test, and/or

(2) a smoothness of 50 to 2,000 seconds, determined in accordance with the Smoothness Testing Method set forth in JAPAN TAPPI Paper and Pulp Testing Method No. 5, and,

(3) a coefficient of dynamic friction of 5 or less, determined in accordance with JIS P 8147, Testing Method of Dynamic Friction (using a weight having a working surface covered with a polystyrene film).

In the cleaning sheet of the present invention, the self-adhesive layer having a low pressure-sensitive adhesive property may comprise a self-adhesive agent comprising at least one member selected from natural rubber, synthetic rubbers, silicone rubbers and polymers and copolymers of acrylate esters and methacrylate esters.

In the cleaning sheet of the present invention, the acrylate ester copolymer and the methacrylate ester copolymer each is preferably selected from copolymers of:

(a-1) one or more member selected from acrylate esters and methacrylate esters represented by the general formula: $CH_2=CR^2COOR^3$ (wherein $R^2$ represents a hydrogen atom or a -$CH_3$ group, and $R^3$ represents a straight or branched chain alkyl group having from 1 to 12 carbon atoms), with

(a-2) one or more ethylenically unsaturated hydrocarbon monomer having at least one functional group selected from an amido group, substituted amido groups, an amino group, substituted amino groups, a carboxyl group, a hydroxyl group, an epoxy group, a mercapto group, and radical polymerizing unsaturated groups.

In the cleaning sheet of the present invention, the copolymerization weight ratio of the copolymerization component (a-1) to the copolymerization component (a-2) is preferably from 50:50 to 99.1:0.1.

In the cleaning sheet of the present invention, the acrylate ester copolymer and the methacrylate ester copolymer each may be selected from copolymers of the copolymerization component (a-1) and the copolymerization component (a-2) with (a-3) an addition-polymerizable unsaturated monomer different from the copolymerization components (a-1) and (a-2). In this case, the copolymerization weight of the copolymerization component (a-3) is preferably 50% by weight or less, based on the total weight of the copolymerization components (a-1), (a-2) and (a-3).

In the cleaning sheet of the present invention, the self-adhesive agent in the self-adhesive layer having a low pressure-sensitive adhesive property is preferably cross-linked with a cross-linking agent comprising at least one member selected from isocyanate compounds, chelating oxazoline compounds, epoxy compounds, polycarbodiimide compounds and metal chelate compounds.

In the cleaning sheet of the present invention, the self-adhesive layer having a low pressure-sensitive adhesive property preferably comprises a cross-linking reaction product of a copolymer which is prepared by the copolymerization of at least one member selected from acrylate esters and methacrylate esters with at least one ethylenically unsaturated hydrocarbon monomer having hydroxyl groups, and which has a weight average molecular weight (Mw) of 300,000 to 1,000,000, with a cross-linking agent comprising an isocyanate compound.

In the cleaning sheet of the present invention, a matting agent having an average particle size of 0.1 to 1,000 μm may be dispersed and contained at least in the surface portion of the self-adhesive layer having a low pressure-sensitive adhesive property.

In the cleaning sheet of the present invention, preferably, the laminating surface of the release sheet facing the self-adhesive layer has a smoothness of 50 to 2,000 seconds; and the self-adhesive layer having a low pressure-sensitive adhesive property is formed on the laminating surface of the release sheet, and the substrate sheet is laminated on and adhered to the self-adhesive layer.

BEST MODE FOR CARRYING OUT THE INVENTION

As a result of extensive investigations to solve the above-described problems of conventional techniques, the present inventors have found that by specifying the characteristic values (adhesive property shown by a probe tack value, and surface properties shown by a smoothness and a coefficient of dynamic friction) of the self-adhesive layer having a low pressure-sensitive adhesive property to a certain range, the above-described problems can be overcome; and also, by specifying the self-adhesive composition used in the self-adhesive layer having a low pressure-sensitive adhesive property and the coating method of the self-adhesive layer having a low pressure-sensitive adhesive property, the desired characteristic values of the self-adhesive layer having a low pressure-sensitive adhesive property can be suitably obtained.

The cleaning sheet of the present invention comprises a substrate sheet, a self-adhesive layer having a low pressure-sensitive adhesive property formed on one surface of the substrate, and a release sheet laminated and detachably attached to the self-adhesive layer. The self-adhesive layer having a low pressure-sensitive adhesive property is characterized by having:

(1) a probe tack value of 0.196133 to 1.96133 N (20 to 200 gf), determined in accordance with JIS Z 0237, Information Reference, 5. Probe Tack Test, and/or
(2) a smoothness of 50 to 2,000 seconds, determined in accordance with the Smoothness Testing Method set forth in JAPAN TAPPI Paper and Pulp Testing Method No. 5, and,
(3) a coefficient of dynamic friction of 5 or less, determined in accordance with JIS P 8147, Testing Method of Dynamic Friction (using a weight having a working surface covered with a polystyrene film), and by the low pressure-sensitive adhesive property.

As described above, in the cleaning sheet of the present invention, the probe tack value of the self-adhesive layer having a low pressure-sensitive adhesive property is from 0.196133 to 1.96133 N (20 to 200 gf), preferably from 0.196133 to 0.980665 N (20 to 100 gf), more preferably from 0.196133 to 0.6864655 N (20 to 70 gf). This probe tack value shows an initial pressure-sensitive adhesive strength of the self-adhesive layer to the stainless steel-made probe. If the probe tack value of the self-adhesive layer of the present invention exceeds 1.96133 N, the self-adhesive layer comes to have an excessively large pressure-sensitive adhesive strength and although high capability of removing the paper dust or dirt adhering to the rubber roller or the like may be obtained, the self-adhesive layer surface cannot smoothly slide on the surface of a fixing member within the transportation means and the transportation means is reduced in the cleaning sheet-transporting property and, as a result, paper clogging may occur within the transportation means. On the other hand, if the probe tack value is less than 0.196133 N, the adhesive force to the paper dust and dirt in the transportation means becomes excessively low and insufficient removal results.

The self-adhesive layer of the present invention has a smoothness (using a an Ohken-type smoothness meter) specified in the JAPAN TAPPI Paper and Pulp Testing Method No. 5, of 50 to 2,000 seconds, preferably from 50 to 1,500 seconds. If the smoothness of the self-adhesive layer of the present invention is less than 50 seconds, the contact area between the transportation means and the fixing member becomes too small, therefore, despite good passing property of the cleaning sheet within the transportation means, the capability of removing by adhesion the paper dust and dirt adhering to the rubber roller or the like in the transportation means becomes insufficient. On the other hand, if the smoothness exceeds 2,000 seconds, although the capability of removing by adhesion the paper dust and dirt adhering to the rubber roller or the like in the transportation means is sufficiently high, the contact area between the self-adhesive layer and the fixing member becomes excessively large, as a result, the smooth passing property of the cleaning sheet itself decreases and troubles such as paper jamming are liable to occur.

In the self-adhesive layer having a low pressure-sensitive adhesive property of the present invention, the coefficient of dynamic friction is measured in accordance with JIS P 8147 except for covering the working surface of the weight with a polystyrene film, namely, the coefficient of self-adhesive layer/styrene film dynamic friction, is 5 or less, preferably from 2 to 4. If the coefficient of self-adhesive layer/styrene film dynamic friction exceeds 5, the coefficient of dynamic friction between the fixing member in the transportation means and the self-adhesive layer of the cleaning sheet increases excessively to give a poor transportation property and troubles such as paper jamming are liable to occur. If the coefficient of dynamic friction approximates to 0 without limit, the cleaning sheet obtained may have good passing property within the transportation means, however, the capability of removing by adhesion the paper dust and dirt within the transportation means is sometimes insufficient. Accordingly, the coefficient of dynamic friction is preferably 0.1 or more, more preferably from 2 to 4.

In order to allow the self-adhesive layer having a low pressure-sensitive adhesive property of the present invention to have a smoothness of 50 to 2,000 seconds, the following methods may be used.

(1) Transfer Method

A self-adhesive layer having a low pressure-sensitive adhesive property is coated on the surface of a releasing agent-coated layer of a release sheet having a surface smoothness of 50 to 2,000 seconds and then dried, the smoothness on the surface of the release sheet-coated layer is transferred to the surface of the self-adhesive layer formed, and a substrate sheet is laminated on the back surface of the self-adhesive layer.

(2) Direct Method

A coating solution containing a self-adhesive agent having a low pressure-sensitive adhesive property is directly coated on one surface of a substrate sheet and dried, the surface of a release sheet having a smoothness of 50 to 2,000 seconds is laminated thereon, and the smoothness on the release sheet surface is transferred onto the surface of the self-adhesive layer.

(3) Pigment Dispersion Method

In a coating solution containing a self-adhesive agent having a low pressure-sensitive adhesive property, organic and/or inorganic pigment particles having an average particle size of 1 μm or more are dispersed, and this coating solution is coated on one surface of a substrate sheet and dried to form a self-adhesive layer having a low pressure-sensitive adhesive property and having fine asperities on the surface thereof.

(4) Bubbling Method

In a coating solution containing a self-adhesive agent having a low pressure-sensitive adhesive property, a bubbling agent is intermingled and this coating solution is coated on one surface of a substrate sheet and this coating layer is heated to allow the bubbling agent to cause bubbling and then solidified, thereby forming fine asperities on the surface of the self-adhesive layer.

(5) Other Uneven Surface Forming Methods

Physical means different from those described above is applied so as to form an uneven surface for the layer formed of a coating solution containing a self-adhesive agent having a low pressure-sensitive adhesive property coated on one surface of a substrate sheet. For example, the coating solution is spray-coated on one surface of a substrate sheet and solidified before the coated layer surface is smoothened, thereby forming fine asperities on the surface.

(6) Method Disclosed in Japanese Unexamined Patent Publication (Kokai) Nos. 50-2736 and 53-65330

On the surface of a layer formed of a coating solution containing a self-adhesive agent having a low pressure-sensitive adhesive property coated on one surface of a substrate sheet, fine particles having a self-adhesive property (for example, fine particles of a copolymer of a (meth)acrylate ester having a self-adhesive property and having a particle size of 1 to 1,000 μm) are spread and the coating solution layer is solidified.

The methods (1) to (6) for forming a self-adhesive layer having a surface with fine asperities may be used individually or in combination of two or more thereof. However, on taking account of the smoothness on the self-adhesive surface of the self-adhesive layer, the reproducibility of the self-adhesive property and the stability of the quality, the method (1) is preferred.

In the method (1), for providing a surface having a desired smoothness to the release sheet, in the case of laminating a paper comprising a base paper with its surface layer having a desired smoothness, such as glassine paper and wood-free paper, or laminating a thermoplastic resin such as polyethylene to form a release agent-coated layer, the surface of a cooling roller used in the molding is designed to have a predetermined surface, then, the uneven shape of the cooling roller can be formed as a reverse uneven shape. In the case where the release agent-coated layer is a plastic resin layer such as PET, polypropylene and polyethylene, the surface layer of the resin layer is subjected to a sand blast treatment and thereby asperities can be formed on the release agent-coated layer.

The transfer method (1) is useful for the formation of the self-adhesive layer of the present invention for the following reasons.

In the transfer method (1), the coating solution containing a self-adhesive agent, which is coated on the surface of the release agent-coated layer (hereinafter referred to as "release surface") of the release sheet, has flowability, therefore, deforms according to the uneven state on the release surface of the release sheet to allow a reverse uneven shape of the uneven shape on the release surface to be formed on the self-adhesive layer surface, and this shape is fixed. As such, the uneven shape on the release surface of the release sheet and the reverse uneven shape on the self-adhesive layer surface are engaged with each other, as a result, even when the obtained cleaning sheet (release sheet body) is pressurized for a long period of time (long-term piling storage), the self-adhesive layer surface can be prevented from, or reduced in, a change in smoothness. If the uneven shape on the release surface of the release sheet and the uneven shape on the self-adhesive layer surface are not engaged with each other and when this cleaning sheet is pressurized for a long period of time, the surface state of the self-adhesive layer is readily deformed by the release surface state of the release sheet. Accordingly, the storage conditions of such a cleaning sheet must be controlled with utmost care.

The cleaning sheet of the present invention produced using the transfer method (1) is liberated from the requirements for special conditions in the long-term storage and even when the cleaning sheets are piled and pressurized during the long-term storage, the self-adhesive layer having a low pressure-sensitive adhesive property can be prevented from, or greatly reduced in, a change in the surface state, so that the desired cleaning property and the smooth movement in the transportation means can be maintained.

The self-adhesive agent contained in the self-adhesive layer having a low pressure-sensitive adhesive property of the cleaning sheet of the present invention contains a pressure-sensitive adhesive resin or rubber showing the above-described surface properties. For this pressure-sensitive adhesive resin or rubber, one or more members selected from pressure-sensitive adhesive rubber materials such as natural rubber, synthetic rubbers and silicone rubbers, and pressure-sensitive resin materials such as polymers and copolymers of acrylate esters and methacrylate esters may be used. The polymers and copolymers of acrylate esters and the methacrylate esters are hereinafter collectively referred to as an acrylic resin. The self-adhesive agent suitable for the transfer method (1) preferably contains an acrylic resin. The self-adhesive agent is more preferably a cross-linked acrylic resin produced by coating a two liquid-type coating solution comprising an acrylic resin having blended therewith a cross-linking agent on the release surface of a release sheet and cross-linking the acrylic resin with the cross-linking agent.

The pressure-sensitive adhesive rubber material is selected from natural rubber, synthetic rubbers and silicone rubbers. Examples of the synthetic rubbers which can be used include isoprene rubber, styrene-butadiene rubber (SBR), styrene-butadiene-styrene block copolymer (SBS), styrene-isoprene-styrene copolymer (SIS), styrene-ethylene-butylene-styrene copolymer (SEBS), butyl rubber and polyisobutylene rubber.

Examples of the silicone rubbers which can be used include polyoxysiloxane. Furthermore, while using this rubber material as the base polymer, one or more tackifying resin having a softening temperature of 50 to 180°C, such as rosin-type resin, terpene-type resin, C5-type petroleum resin, C9-type petroleum resin and dicyclopentadiene-type petroleum resin, may be added thereto. Still further, an oil which is liquid at an ordinary temperature, a plasticizer, an antioxidant, a stabilizer, a filler, a pigment and a cross-linking agent may be blended individually or in combination of two or more thereof, if desired.

In the cleaning sheet of the present invention, the acrylic resin used as the self-adhesive agent having a low pressure-sensitive adhesive property is not particularly limited as long as it can satisfy the requirements of the present invention, however, copolymers of the following component monomers are preferably used.

(1) Copolymer of the following components (a-1) and (a-2)

A copolymer of

(a-1) one or more member selected from acrylate esters and methacrylate esters represented by the general formula (I): $CH_2=CR^2COOR^3$ (wherein $R^2$ represents a hydrogen atom or a $-CH_3$ group, and $R^3$ represents a straight or branched chain alkyl group having from 1 to 12 carbon atoms),
with
(a-2) one or more ethylenically unsaturated hydrocarbon monomer having at least one functional group selected from an amido group, substituted amido groups, an amino group, substituted amino groups, a carboxyl group, a hydroxyl group, an epoxy group, a mercapto group, and radical polymerizing unsaturated groups.

In the (a-1)/(a-2) copolymer, the copolymerization weight ratio between the component monomer (a-1) and the component monomer (a-2) is preferably from 50:50 to 99.9:0.1, more preferably from 70:30 to 95:5. In the production of the (a-1)/(a-2) copolymer,

**EP 1 106 136 B1**

(2) Copolymer of the following component monomers (a-1), (a-2) and (a-3)

A copolymer of

(a-1) and (a-2) the same as described above, with
(a-3) one or more addition-polymerizable unsaturated organic compound monomer different from the copolymerization components (a-1) and (a-2).

In the (a-1)/(a-2)/(a-3) copolymer, the copolymerization weight of the copolymerization component (a-3) is 50% by weight or less, preferably from 0 to 30% by weight, based on the total weight of the copolymerization components (a-1), (a-2) and (a-3).

The copolymer of the copolymerization components (a-1), (a-2) and if desired, (a-3) preferably has a glass transition temperature of -100 to 60°C and also preferably has a weight average molecular weight of 500,000 to 1,000,000.

The copolymerization component monomer (a-1) is, as described above, selected from the compounds represented by formula (I): $CH_2=CR^2COOR^3$, wherein $R^2$ represents a hydrogen atom or a methyl group ($-CH_3$), and $R^3$ represents an alkyl group (which may be straight or branched) having from 1 to 12 carbon atoms, such as a methyl group, an ethyl group, an i-propyl group, an n-butyl group, an i-butyl group, an n-hexyl group, a 2-ethylhexyl group, an n-octyl group, an i-octyl group, an n-nonyl group, an i-nonyl group, an n-decyl group or an n-dodecyl group. Specific examples of the acrylate esters and methacrylate esters represented by formula (I) (hereinafter, these two esters are collectively called a (meth)acrylate ester) include methyl (meth)acrylate, ethyl (meth)acrylate, n-butyl (meth)acrylate, i-butyl (meth)acrylate, n-hexyl (meth)acrylate, 2-ethylhexyl (meth)acrylate, n-octyl (meth)acrylate, i-octyl (meth)acrylate, n-nonyl (meth)acrylate, i-nonyl (meth)acrylate and n-decyl (meth)acrylate.

In the (a-1)/(a-2) copolymer or (a-1)/(a-2)/(a-3) copolymer, the copolymerization weight of the component (a-1) is preferably 50% by weight or more, more preferably from 70 to 95% by weight, still more preferably from 75 to 95% by weight.

The ethylenically unsaturated organic compound used in the copolymerization component (a-2) contains one or more members selected from an amido group, substituted amido groups (substituent is, for example, a methyl group, an ethyl group, a methoxymethyl group, an ethoxymethyl group, a butoxymethyl group or a dimethylaminopropyl group) such as N-methylacrylamide, N-ethylacrylamide, N,N-dimethylacrylamide, N-methoxymethylacrylamide, N-ethoxymethylacrylamide, N-butoxymethylacrylamide and N-dimethylaminopropylmethacrylamide, an amino group, substituted amino groups (substituent is, for example, a methyl group or an ethyl group) such as N,N-dimethylaminoethyl acrylate, N,N-dimethylaminoethyl methacrylate, N,N-diethylaminoethyl acrylate and N,N-dimethylaminoethyl methacrylate, a carboxyl group, a hydroxyl group, an epoxy group and a mercapto group. In order to improve the adhesive property of the obtained self-adhesive layer to a substrate sheet and improve the pot life after the mixing with a cross-linking agent, the copolymerization component (a-2) preferably has a hydroxyl group out of those substituents. Examples of the hydroxyl group-containing monomer (a-2) include β-hydroxyethyl acrylate, β-hydroxyethyl methacrylate, hydroxypropyl acrylate and hydroxypropyl methacrylate.

Other examples of the monomer (a-2) which can be used include maleate esters and fumarate esters, such as dimethyl maleate, di-n-butyl maleate, di-2-ethylhexyl maleate, di-n-octyl maleate and di-n-octyl fumarate; saturated fatty acid vinyl esters such as vinyl acetate, vinyl propionate and vinyl versatate; acrylamides such as acrylamide and N-methylacrylamide; methacrylamides such as N,N-dimethylmethacrylamide; aminoalkyl acrylates and aminoalkyl methacrylates, such as aminoethyl acrylate, N,N-dimethylaminoethyl acrylate, N,N-diethylaminoethyl acrylate, aminoethyl methacrylate, N,N-dimethylaminoethyl methacrylate and N,N-diethylaminoethyl methacrylate; epoxy group-containing (meth)acrylates such as glycidyl acrylate and glycidyl methacrylate; mercaptanes such as vinylmercaptane and allylmercaptane; poly(meth)acrylates such as (poly)ethylene glycol diacrylate, neopentyl glycol diacrylate, trimethylol propane triacrylate, 1,6-hexanediol diacrylate, (poly)ethylene glycol dimethacrylate, neopentyl glycol dimethacrylate, trimethylol propane trimethacrylate and 1,6-hexanediol dimethacrylate; allyl (meth)acrylates such as allyl acrylate and allyl methacrylate; and ethylenically unsaturated fatty acids such as acrylic acid, methacrylic acid, itaconic acid, maleic acid, fumaric acid, crotonic acid and citraconic acid.

In the (a-1)/(a-2) copolymer or (a-1)/(a-2)/(a-3) copolymer, the copolymerization weight of the component monomer (a-2) is preferably 0.1 to 50% by weight, more preferably from 5 to 30% by weight, still more preferably from 5 to 25% by weight.

The copolymerization component monomer (a-3) is selected from ethylenically unsaturated organic compound monomers different from the monomers (a-1) and (a-2). Examples of the monomer (a-3) include aromatic vinyl compounds such as styrene, vinyltoluene and divinylbenzene; acrylonitriles such as acrylonitrile; and allyl compounds such as triallyl cyanurate, triallyl isocyanurate, diallyl phthalate.

The acrylic resin for use in the present invention is obtained by polymerizing the components monomers (a-1), (a-2) and if desired, (a-3) each in a predetermined amount according to an arbitrary polymerization method such as

7

block polymerization, solution polymerization, suspension polymerization or emulsion polymerization. In the present invention, in the case of forming the desired self-adhesive layer having a low pressure-sensitive adhesive property by the transfer method (1), the acrylic monomer mixture is preferably polymerized by solution polymerization.

Examples of the additive for use in the production of the acrylic resin include a polymerization initiator including oil-soluble polymerization initiators such as benzoyl peroxide, lauroyl peroxide, diisopropylperoxy dicarbonate, di-2-ethylhexylperoxy dicarbonate, t-butylperoxy pivalate, t-butylperoxy benzoate, t-butylperoxy-2-ethylhexanoate, 2,2'-azobisisobutyronitrile, 2,2'-azobis-2-methylbutyronitrile, 2,2'-azobis-2,4-dimethylvaleronitrile, 2,2'-azobis-4-methoxy-2,4-dimethylvaleronitrile and 2,2'-azobismethylisobutyrate, and water-soluble polymerization initiators, for example, persulfates such as sodium persulfate, potassium persulfate and ammonium persulfate, and hydrogen peroxide; a reducing agent including reductive organic compounds such as ascorbic acid, tartaric acid, citric acid, racemic acid and formaldehyde sulfoxylate metal salt, and ferrous sulfates of reductive inorganic compounds, such as sodium thiosulfate, sodium sulfite, sodium bisulfite and sodium metabisulfite; and a chain transfer agent such as n-dodecylmercaptane, t-dodecylmercaptane, n-butylmercaptane, 2-mercaptoethanol, 2-ethylhexylthioglycolate and trichlorobromomethane. In the case of polymerizing the resin in an aqueous medium, a surfactant including polyvinyl alcohols (hereinafter sometimes referred to as PVA) such as partially saponified polyvinyl alcohol, completely saponified polyvinyl alcohol and modified polyvinyl alcohol, and cellulose derivatives such as hydroxyethyl cellulose, hydroxypropyl cellulose and carboxymethyl cellulose salt, is preferably used for stabilizing the suspension. The amount of each additive used is preferably from 0.1 to 10.0 parts by weight per 100 parts by weight of the acrylic monomer mixture.

Also, in the case of transfer-coating the obtained acrylic resin by the transfer method (1), the acrylic resin preferably has a weight average molecular weight (Mw) of 300,000 to 1,000,000, more preferably from 300,000 to 800,000, still more preferably from 400,000 to 750,000, determined by GPC (gel permeation chromatography). If the weight average molecular weight (Mw) of the acrylic resin is less than 300,000, when the acrylic resin is adhered to a substrate such as paper, the acrylic resin disadvantageously permeates into the substrate and a self-adhesive layer having a desired thickness can be hardly formed, whereas if the weight average molecular weight (Mw) exceeds 1,000,000, the adhesive property between the substrate and the self-adhesive agent is deficient and the self-adhesive agent can be hardly joined with the substrate. The molecular weight determined by GPC can be measured, for example, using an SC-8010 (manufactured by Toso). More specifically, THF (tetrahydrofuran) is used as the solvent and the eluent of a sample, a THF solution of a sample is charged into a measuring apparatus, for example, when the flow rate of THF is 1.0 ml/min, the time spent until detecting the sample collected from a column is determined, and from the calibration curve of polystyrene (having a known molecular weight) as the standard sample, the molecular weight of the sample is calculated.

If the glass transition temperature (Tg) of the acrylic copolymer for use in the present invention is as high as in excess of 60°C, the self-adhesive property excessively decreases, and paper dust, dirt and the like adhering to the rubber roller cannot be satisfactorily removed.

In the present invention, the glass transition temperature of the self-adhesive composition is measured and determined using a differential scanning calorimeter (DSC). However, the glass transition temperature may also be calculated from the kinds of monomers used in the preparation of the copolymer and the weight percentage of each monomer in the monomer mixture using the following formula according to the description, for example, in Lawrence E. Nielsen (translated by Shigeharu Onogi), Kobunshi no Rikigakuteki Seishitsu (Mechanical Properties of Polymers), 1st ed., 9th print, pp. 26-27, Kagaku Dojin (1970). By calculating as such, as well known in the art, an approximate value of the glass transition temperature of the copolymer obtained can be estimated.

$$1/Tg = Wt_1/Tg_1 + Wt_2/Tg_2 + \ldots \ldots + Wt_n/Tg_n$$

wherein

Tg: glass transition temperature (°K) of copolymer,
$Tg_1$: glass transition temperature (°K) of homopolymer of monomer 1,
$Tg_2$: glass transition temperature (°K) of homopolymer of monomer 2,
$Tg_n$: glass transition temperature (°K) of homopolymer of monomer n,
$Wt_1$: weight percentage of monomer 1,
$Wt_2$: weight percentage of monomer 2, and
$Wt_n$: weight percentage of monomer n.

As the glass transition temperatures of homopolymers of respective monomers used herein, the values described, for example, in J. Brandrup and E.H. Immergut (compiler) POLYMER HANDBOOK, Second Edition III, pp.

145-155, may be used.

In the present invention, the composition for forming the self-adhesive layer may contain, if desired, the following additives each in an amount of 0.1 to 30% by weight:

(1) a plasticizer having a glass transition temperature (Tg) of -70 to 10°C or a surfactant having plasticity to the main component, and examples thereof include oils such as naphthene-type process oil and paraffin-type oil, plasticizers and surfactants, such as dioctylphthalic acid, and tackifiers such as stabilized rosin glycerin ester, β-pinene resin, terpene resin obtained by polymerizing α-pinene resin, C5-type petroleum resin and C9-type petroleum resin,

(2) a cross-linking agent or a curing agent, and examples thereof include isocyanate-type cross-linking agents, chelate-type cross-linking agents, oxazoline-type cross-linking agents, polyglycidyl compounds having an epoxy group, glycidyl ethers of polyhydric alcohols, hydrazide-type cross-linking agents, polycarbodiimide-type cross-linking agents and ionic cross-linking agents containing a metal chelate compound or the like; and

(3) a pigment (matting agent) for forming asperities on the surface of the self-adhesive layer, and examples thereof include natural or synthetic resins and/or pigments, aluminum pastes and glass beads, having an average particle size of 0.1 to 1,000 $\mu$m, such as casein, dextrin, starch, carboxymethyl cellulose, methyl cellulose, ethyl cellulose, hydroxyethyl cellulose, polyvinyl alcohol, styrene-butadiene copolymer, methyl methacrylate-butadiene copolymer, ethylene-vinyl chloride copolymer, ethylene-vinyl acetate copolymer and acrylate ester copolymer.

Among these additives, copolymerizable additives may be copolymerized together with the main component monomers at the time of polymerizing the self-adhesive agent composition. The additives such as plasticizer and/or tackifier and cross-linking agent may be added directly to the self-adhesive agent composition after the polymerization or separately dispersed in the main agent for the self-adhesive agent, thereby manufacturing a coating solution. To the coating solution, if desired, a thickener, a pH adjusting agent, a defoaming agent, an antiseptic, a pigment, an inorganic filler, a stabilizer, a wetting agent, a moistening agent and the like may be added similarly to other auxiliary agents, however, if these are present in excess in the self-adhesive agent composition, the self-adhesive property is adversely affected, therefore, these additives must be blended in a minimum amount.

The cross-linking agent is added not only to adjust the molecular weight of the self-adhesive agent but also for the purpose of improving the adhesive property of the self-adhesive layer to a substrate, more specifically, for increasing the cohesive force of the self-adhesive agent and the anchoring force of the self-adhesive agent to the substrate.

The cross-linking agent is not particularly limited as long as two or more groups capable of reacting with a functional group of a polymer contained in the self-adhesive agent are contained within the molecule thereof. However, cross-linking agents such that if a curing agent is added to the self-adhesive agent composition, a reaction with the self-adhesive agent takes place to cause gelling or thickening before the coating or generate aggregates, are not preferred. In other words, a preferred cross-linking is chemically stable before forming a self-adhesive agent layer (before coating), allows the dispersion medium to evaporate at the coating of the self-adhesive agent or after drying the self-adhesive composition, and undergoes an irreversible cross-linking reaction. The combination of this cross-linking agent and the functional group of a polymer in the self-adhesive layer may be a known combination but in the present invention, in the case of forming the self-adhesive layer having a very low self-adhesive force by the transfer method, it is preferred that the cross-linking agent scarcely undertakes a reaction immediately after the coating and due to aging after the coating, the cross-linking agent gradually undertakes the cross-linking reaction to decrease in the self-adhesive force and improve the adhesive property to the substrate. Specific examples of this combination of a functional group and a cross-linking agent include a combination of a hydroxyl group contained in a polymer and an aliphatic isocyanate-type cross-linking agent such as hexamethylene diisocyanate.

The amount of the cross-linking agent for use in the present invention is, in terms of a solid content weight ratio to the self-adhesive agent polymer, preferably from 99.99/0.01 to 80/20, more preferably from 99.95/0.05 to 90/10, still more preferably from 99.9/0.1 to 93/7.

For the substrate sheet of the cleaning sheet of the present invention, a conventionally known sheet material may be used. Specific examples thereof include paper materials including printing paper sheets such as wood-free paper, art paper, coated paper and cast-coated paper, a kraft paper, an impregnated paper and a laminated paper; synthetic resin films such as PET film, PE film and PP film; synthetic papers; non-woven fabrics; and sheets obtained by laminating these. The substrate may be used by itself or may be used after laminating an anchor layer thereon for improving the adhesive property to the self-adhesive agent. In the case of coating the self-adhesive agent of the present invention directly in the substrate side (back surface of the substrate), a substrate sheet having laminated thereon a filling layer is preferably used so as to prevent the generation of wrinkles due to penetration of the self-adhesive agent at the time of coating. In the case of using a substrate prone to the effect of heat, such as various synthetic resin films, it is preferred to select a grade having a high heat resistance and perform the drying at a low temperature. The anchor layer and the filling layer are not particularly limited on their compositions and for example, each layer may be formed of a material mainly comprising a natural or synthetic resin such as casein, dextrin, starch, carboxymethyl cellulose, methyl cellulose, ethyl cellulose, hydroxyethyl cellulose, polyvinyl alcohol, a styrene-butadiene copolymer, a methyl methacrylate-butadiene copolymer, an ethylene-vinyl chloride copolymer, an ethylene-vinyl acetate copolymer or an acrylate ester copolymer, and/or a pigment preferably to have a dry weight of approximately from 0.1 to 10 g/m$^2$. Examples of the pigment which can be used include inorganic pigments such as kaolin, calcium carbonate, clay, talc, calcined kaolin, delaminated kaolin, titanium dioxide, aluminum hydroxide, silica and white carbon, and organic synthetic pigments such as polystyrene resin fine particle, urea-formalin resin fine particle and fine hollow particles.

The release sheet for use in the cleaning sheet of the present invention may be selected from conventionally known release sheets. In general, the self-adhesive layer surface is readily affected by the release sheet surface and the change in smoothness, therefore, the surface layer of the release sheet preferably has a smoothness of 50 to 2,000 seconds. For the substrate of the release sheet, a filled paper, a film substrate such as PET film, PE film and PP film, a synthetic paper and a non-woven fabric may be used. The filled paper is obtained, for example, by coating as a filling layer a coating solution mainly comprising a natural or synthetic resin such as casein, dextrin, starch, carboxymethyl cellulose, methyl cellulose, ethyl cellulose, hydroxyethyl cellulose, polyvinyl alcohol, a styrene-butadiene copolymer, a methyl methacrylate-butadiene copolymer, an ethylene-vinyl chloride copolymer, an ethylene-vinyl acetate copolymer or an acrylate ester copolymer, and/or a pigment on a thermoplastic resin such as polyethylene-laminated paper, a glassine paper, a clay coated paper or a wood-free paper to have a dry weight of approximately from 0.1 to 10 g/m$^2$, and then drying the coating. Examples of the filling pigment which can be used include inorganic pigments such as kaolin, calcium carbonate, clay, talc, calcined kaolin, delaminated kaolin, titanium dioxide, aluminum hydroxide, silica and white carbon, and organic synthetic pigments such as polystyrene resin fine particle, urea-formalin resin fine particle and organic polymer fine hollow particle. The releasing agent for the release sheet may be selected from conventionally known releasing agents and for example, a water dispersion-type, solvent-type or solventless-type silicone resin or a fluororesin may be used. The releasing agent is coated on the above-described release substrate to have a dry weight of approximately from 0.05 to 3 g/m$^2$ and then cured by means of heat curing or ionization radiation curing to form a release layer, thereby obtaining a release sheet.

The cleaning sheet of the present invention can be usually produced by a transfer method, namely, by applying a self-adhesive agent coating solution onto a releasing agent-coated layer of a release sheet, drying it to form a self-adhesive layer and laminating the self-adhesive layer on one surface of a substrate sheet. In this method, the self-adhesive agent is first coated on the releasing agent-coated layer of the release sheet so as to physically form a desired uneven surface for the self-adhesive layer surface. Even in the direct method of applying a self-adhesive agent coating solution onto a substrate sheet, drying it and laminating a release sheet to the surface of this self-adhesive layer, the coating method and/or the method and conditions for curing the produced self-adhesive sheet are preferably controlled to form the same surface as the self-adhesive layer surface obtained by the transfer method.

The production method for the cleaning sheet of the present invention is not limited to the above-described transfer method and direct method but as long as the object of the present invention can be attained, other methods may also be used.

For applying the self-adhesive agent coating solution of the present invention onto one surface of a substrate sheet or onto the release surface of a release sheet, a general coating apparatus may be used, such as roll coater, reverse roll coater, knife coater, air knife coater, bar coater, slot die coater, lip coater, gravure coater, reverse gravure coater and spray atomizer. Also, the self-adhesive agent coating solution may be coated using a printing machine such as screen printing and gravure printing.

The amount of the self-adhesive layer coated is preferably controlled to a dry weight of 3 to 30 g/m$^2$. If the amount of the self-adhesive layer coated is less than 3 g/m$^2$, the cleaning sheet obtained may be deficient in the dust-removing capability, whereas if it exceeds 30 g/m$^2$, the cleaning sheet obtained is saturated in the capability and this is disadvantageous in view of profitability.

EXAMPLES

The present invention is described in greater detail below by referring to the Examples, however, needless to say, the present invention is by no means limited thereto.

The cleaning sheets manufactured in Examples and Comparative Examples were tested as follows.

(1) Measurement of Molecular Weight of Self-Adhesive Agent

From the self-adhesive agent tested, the solvent was volatilized and the residue was dissolved in THF to prepare a sample solution having a concentration of 0.03 wt%. The sample solution obtained was measured by GPC using an SC-8010 (trademark, manufactured by TOSO) under the following conditions and from the detection time when the self-adhesive agent was detected, the weight average molecular weight (Mw), number average molecular weight (Mn) and Mw/Mn were determined.

Column: G-4000HXL + G-2000HXL (both trademarks, manufactured by TOSO)
Eluent: THF
Flow rate:1.0 ml/min
Detector: RI detector, UV detector

(2) Measurement of Cleaning Capability

(a) Preparation of Sample

A sample was selected from the cleaning sheets aged for 1 week after manufacture and subjected to a performance test. Here, for preparing a sample after the storage of product, the cleaning sheet (210 mm (width) $\times$ 2,000 m (length)) was wound up at a winding hardness namely a Schmidt hammer value of 20 determined in accordance with J. TAPPI Paper and Pulp Testing Method No. 37, and was left standing in this state for 1 month. From the core part of the cleaning sheet taken up, a sample was cut out and subjected to an evaluation test.

(b) Method of Printer-Cleaning Aptitude Test

Through an ink jet printer (Model MJ-510C, manufactured by Seiko Epson), 1,000 ink jet paper sheets were passed and thereafter, using this printer, a series of operations from feeding a cleaning sheet until delivering it was repeated three times while bringing the rubber roller of the printer into contact with the self-adhesive layer surface of the cleaning sheet. The running property at the passing of the cleaning sheet (smooth passing property) and the effect of removing impurities adhering to the rubber roller (cleaning property) were evaluated according to the following criteria. From the results obtained, the cleaning property was generally judged.

Smooth Passing of Paper

Criteria:

O: No trouble occurs in the feeding, running and delivery of the cleaning sheet.
Δ: The feeding, running and delivery can be attained by partially assisting the cleaning sheet.
×: The cleaning sheet cannot be smoothly fed, run and delivered and noise is generated during the running.

Cleaning Effect

Criteria:

O: Impurities adhering to the rubber roller can be completely removed.
Δ: Almost all (70% or more) impurities adhering to the rubber roller can be removed.
×: Only a part (less than 70%) of impurities adhering to the rubber roller can be adhered.

General Evaluation

The minimum values in the evaluation results on the smooth passing property and the cleaning effect were used as the evaluation results and therefrom the practicability was judged.

Criteria:

O: The smooth passing property and the cleaning property both are good and the cleaning sheet has aptitude for practical use.
Δ: The smooth passing property and/or the cleaning property are somewhat insufficient but the cleaning sheet can be used in practice.
×: The smooth passing property and/or the cleaning property both are deficient and the cleaning sheet lacks aptitude for practical use.

Example 1

A cleaning sheet was manufactured through the following steps.

(1) Production of Release Sheet

A base paper (DS Light Blue, trademark, basis weight: 91.4 g/m$^2$, produced by Oji Paper) for direct release paper was used as the release sheet substrate. On the surface of the base paper, SD7220 (trademark, produced by Toray and Dow Corning Silicone) as a silicone-type releasing agent was coated to have a coated amount of 0.1 g/m$^2$ after drying, thereby manufacturing a release sheet. The smoothness on the surface of the releasing agent-coated layer of the release sheet obtained was 300 seconds.

(2) Preparation of Self-Adhesive Agent Coating Solution

Into a reactor equipped with a thermometer, a stirrer, a nitrogen inlet tube and a reflux condenser, 300 parts by weight of ethyl acetate and 200 parts by weight of toluene were charged. While stirring the resulting mixture, the temperature was elevated and when the temperature of the mixture reached about 70°C, the air in the reactor was displaced by nitrogen gas according to nitrogen purging. Thereafter, a mixed solution of 320 parts by weight of 2-ethylhexyl acrylate (hereinafter sometimes simply referred to as "2-EHA"), 6.5 parts by weight of β-hydroxyethyl acrylate methacrylic acid and 1.2 parts by weight of benzoyl peroxide (hereinafter sometimes simply referred to as "BPO") was added dropwise to the reactor over 3 hours. The polymerization temperature was kept at 80°C and after the completion of dropwise addition of the mixed solution, the polymerization reaction was completed within 15 hours. The resulting self-adhesive agent-containing composition was measured on the physical values and, as a result, the solid content concentration was 40.0%, THF-soluble components of the polymer contained in the self-adhesive agent composition had Mw of 650,000, the Mw/Mn was 7.4, and Tg was -71°C.
To 100 parts by weight of the thus-obtained self-adhesive agent composition, 7 parts by weight of hexamethylene diisocyanate as a cross-linking agent was blended and the resulting mixture was thoroughly stirred to prepare a self-adhesive agent coating solution.

(3) Manufacture of Cleaning Sheet

A wood-free paper (basis weight: 81.4 g/m$^2$, produced by Oji Paper) was used as the substrate sheet. On the release surface of the release sheet prepared above, the self-adhesive agent coating solution was coated by a comma coater such that the amount of the self-adhesive agent coated was 20 g/m$^2$ after the drying, and then dried. On the surface of the thus-formed self-adhesive layer, one surface of the substrate sheet was laminated and thereby, a cleaning sheet was manufactured. The smoothness on the surface of the self-adhesive layer obtained was 320 seconds, the coefficient of dynamic friction to polystyrene was 3.0 and the probe tack value was 0.294 N (30 gf).

Example 2

A cleaning sheet was manufactured through the following steps.

(1) Production of Release Sheet

OK Cream (trademark, basis weight: 77 g/m$^2$, produced by Oji Paper) laminated with polyethylene was used as the release sheet substrate and SD7220 (trademark, produced by Toray and Dow Corning Silicone) was used as a silicone-type releasing agent. This releasing agent was coated on the polyethylene-laminated surface of the substrate to have a coated amount of 0.1 g/m$^2$ after drying, thereby manufacturing a release sheet. The smoothness on the surface of the releasing agent-coated layer (release surface) of the release sheet obtained was 1,880 seconds.

(2) Preparation of Self-Adhesive Agent Coating Solution

A self-adhesive agent coating solution was obtained in the same manner as in Example 1.

(3) Manufacture of Cleaning Sheet

A cleaning sheet was manufactured in the same manner as in Example 1 except for using the release sheet prepared above. The smoothness on the surface of the self-adhesive layer obtained was 1,950 seconds, the coefficient of dynamic friction to polystyrene was 4.8 and the probe tack value was 0.686 N (70 gf).

Example 3

A cleaning sheet was manufactured through the following steps.

(1) Production of Release Sheet

A release sheet was manufactured in the same manner as in Example 1.

(2) Preparation of Self-Adhesive Agent Coating Solution

A self-adhesive agent coating solution was prepared in the same manner as in Example 1.

(3) Manufacture of Cleaning Sheet

A wood-free paper (basis weight: 81.4 g/m$^2$, produced by Oji Paper) was used as the substrate sheet. On one surface of the substrate sheet, the self-adhesive agent coating solution prepared above was directly coated by a comma coater such that the amount of the self-adhesive agent coated was 20 g/m$^2$ after the drying, and then dried. On the surface of the thus-formed self-adhesive layer, the release surface of the release sheet prepared above was laminated to manufacture a cleaning sheet. The smoothness on the surface of the self-adhesive layer of the cleaning sheet obtained was 950 seconds, the coefficient of dynamic friction to polystyrene was 4.5 and the probe tack value was 0.588 N (60 gf).

Example 4

A cleaning sheet was manufactured through the following steps.

(1) Production of Release Sheet

A release sheet was manufactured in the same manner as in Example 1.

(2) Preparation of Self-Adhesive Agent Coating Solution

Into a reactor equipped with a thermometer, a stirrer, a nitrogen inlet tube and a reflux condenser, 330 parts by weight of ion exchanged water was charged, and then the water temperature was elevated to 80°C. In a separate vessel, 195 parts by weight of ion exchanged water and 66 parts by weight of an aqueous solution of polyoxyethylene alkyl phenyl ether sodium sulfate ester salt-type anionic surfactant (non-volatile content: 27 wt%) were charged and dissolved by stirring. To this solution, a monomer mixture containing 397 parts by weight of (2-ethylhexyl acrylate (2-EHA), 197 parts by weight of methyl methacrylate (hereinafter sometimes simply referred to as "MMA") and 6 parts by weight of acrylic acid (hereinafter sometimes simply referred to as "AA") was added and stirred to prepare a monomer premix. The contents in the reactor were heated while stirring under a nitrogen stream and when the water temperature in the reactor reached 80°C, ammonium persulfate as a polymerization initiator and sodium metabisulfite as a reducing agent were added each in an amount of 0.4 parts by weight. Thereto, the monomer premix prepared above and 60 parts by weight of an aqueous ammonium persulfate solution in a 8 wt% concentration were added in sequence, the polymerization was initiated at 80°C, and the polymerization reaction was performed at 80°C for about 3 hours. After the completion of the polymerization reaction, the stirring was continued at a temperature of 80°C for about 1 hour and thereafter, the reaction mixture was cooled to room temperature. To this reaction mixture, 4 parts by weight of 25% aqueous ammonia was added to adjust the pH value to 7 to 8 and thereby an aqueous emulsion of acrylic resin was manufactured. The solid content concentration of this aqueous emulsion was 50.3 wt%, the pH value was 7.5, the viscosity was 0.060 Pa·s (60 cps, 25°C, measured using BH-type rotary viscometer at 20 rpm), the average particle size was 0.2 μm, the THF-soluble components of the copolymer contained in the aqueous emulsion had Mw of 320,000, the Mw/Mn was 5.6, and the Tg was -24°C.

To 100 parts by weight of the thus-obtained acrylic resin aqueous emulsion, 30 parts by weight of an acryl resin-type pigment having a particle size of 3 μm (PG-2, trademark, produced by Saiden Kagaku, solid content: 26 w%) was blended and thoroughly stirred to prepare a self-adhesive agent coating solution.

(3) Manufacture of Cleaning Sheet

A wood-free paper (basis weight: 81.4 g/m$^2$, produced by Oji Paper) was used as the substrate sheet. On the surface of this substrate sheet, the self-adhesive agent coating solution prepared above was directly coated by a comma coater such that the amount of the self-adhesive agent coated was 20 g/m$^2$ after the drying, and then dried. On the surface of the thus-formed self-adhesive layer, the release surface of the release sheet prepared above was laminated to manufacture a cleaning sheet. The smoothness on the surface of the self-adhesive layer obtained was 70 seconds, the coefficient of dynamic friction to polystyrene was 2.1 and the probe tack value was 0.245 N (25 gf).

Example 5

A cleaning sheet was manufactured through the following steps.

(1) Production of Release Sheet

A release sheet was manufactured in the same manner as in Example 1.

(2) Preparation of Self-Adhesive Agent Coating Solution

Into a reactor equipped with a thermometer, a stirrer, a nitrogen inlet tube and a reflux condenser, 730 parts by weight of ion exchanged water, 131 parts by weight of partially saponified polyvinyl alcohol in a 5 wt% concentration, which was previously dissolved in water, and 13 parts by weight of an aqueous solution of polyoxyethylene alkyl phenyl ether sodium sulfate ester salt-type anionic surfactant (non-volatile content: 27 wt%) were charged, and the mixture was thoroughly stirred. In a separate vessel, 320 parts by weight of 2-ethylhexyl acrylate (2-EHA), 6.5 parts by weight of methacrylic acid (MAA) and 1.2 parts by weight of benzoyl peroxide (BPO) were dissolved with stirring and then, the resulting monomer mixture solution was added to the above-described aqueous solution in the reactor and stirred. After stirring for one hour while controlling the stirring rate to around about 500 rpm, the temperature of the reaction mixed solution was elevated and when the temperature of the reaction mixed solution reached about 70°C, the air in the reactor was purged by nitrogen and thereby displaced with nitrogen gas. The reaction mixture temperature rose and when reached from 75 to 80°C, a polymerization reaction was initiated and heat was abruptly generated and, as a result, the reaction mixture temperature reached around 90°C. The reaction mixed solution was cooled and reacted for 5 hours while keeping the temperature at 80°C. Thereafter, an aqueous suspension of the polymer produced was cooled to 30°C and thereto about 0.7 parts by weight of 25% aqueous ammonia was added to adjust the pH to 8 to 9. The thus-obtained polymer suspension had a solid content concentration of 28.0% and the polymer particles had an average particle size of 45 μm. This polymer suspension was used as the self-adhesive agent coating solution. The THF-soluble polymer components in this self-adhesive agent coating solution had Mw of 370,000 and the Mw/Mn was 6.5.

(3) Manufacture of Cleaning Sheet

A wood-free paper (basis weight: 81.4 g/m$^2$, produced by Oji Paper) was used as the substrate sheet. On the surface of this substrate sheet, the self-adhesive agent coating solution prepared above was directly coated by a comma coater such that the amount of the self-adhesive agent coated was 10 g/m$^2$ after the drying, and then dried. On the surface of the thus-formed self-adhesive layer, the release surface of the release sheet prepared above was laminated to manufacture a cleaning sheet. The smoothness on the surface of the self-adhesive layer obtained was 55 seconds, the coefficient of dynamic friction to polystyrene was 3.5 and the probe tack value was 1.765 N (180 gf).

Example 6

A cleaning sheet was manufactured through the following steps.

(1) Production of Release Sheet

A release sheet was manufactured in the same manner as in Example 1.

(2) Preparation of Self-Adhesive Agent Coating Solution

A self-adhesive agent coating solution was prepared in the same manner as in Example 1 except that 7 parts by weight of a cross-linking agent and 5 parts by weight of a foaming agent (AR739, trademark, a highly hydrous and highly absorptive polymer (acrylic acid), produced by Likidine) were blended per 100 parts by weight of the self-adhesive composition.

(3) Manufacture of Cleaning Sheet

A cleaning sheet was manufactured in the same manner as in Example 1 except that the self-adhesive coating solution prepared above was used. The smoothness on the surface of the self-adhesive layer obtained was 50 seconds, the coefficient of dynamic friction to polystyrene was 3.5 and the probe tack value was 0.539 N (55 gf).

Comparative Example 1

A cleaning sheet was manufactured through the following steps.

(1) Production of Release Sheet

A matted laminate sheet obtained by laminating OK Cream (trademark, basis weight: 77 g/m$^2$, produced by Oji Paper) with matted polyethylene was used as the release sheet substrate and SD7220 (trademark, produced by Toray and Dow Corning Silicone) was used as a silicone-type releasing agent. This releasing agent was coated on one surface of the release sheet substrate to have a coated amount of 0.1 g/m$^2$ after drying, thereby manufacturing a release sheet. The smoothness on the release surface of the release sheet obtained was 40 seconds.

(2) Preparation of Self-Adhesive Agent Coating Solution

A self-adhesive agent coating solution was prepared in the same manner as in Example 1.

(3) Manufacture of Cleaning Sheet

A cleaning sheet was obtained in the same manner as in Example 1 except that the release sheet prepared above was used. The smoothness on the surface of the self-adhesive layer obtained was 45 seconds, the coefficient of dynamic friction to polystyrene was 1.8 and the probe tack value was 0.177 N (18 gf).

Comparative Example 2

(1) Production of Release Sheet

A high-gloss laminate sheet obtained by laminating OK Cream (trademark, basis weight: 77 g/m$^2$, produced by Oji Paper) with polyethylene was used as the release substrate and SD7220 (trademark, produced by Toray and Dow Corning Silicone) was used as a silicone-type releasing agent. This releasing agent was coated on one surface of the release sheet substrate to have a coated amount of 0.1 g/m$^2$ after drying, thereby manufacturing a release sheet. The smoothness on the release surface of the release sheet obtained was 2,050 seconds.

(2) Preparation of Self-Adhesive Agent Coating Solution

A self-adhesive agent coating solution was prepared in the same manner as in Example 1.

(3) Manufacture of Cleaning Sheet

A cleaning sheet was manufactured in the same manner as in Example 1 except that the release sheet prepared above was used. The smoothness on the surface of the self-adhesive layer obtained was 2,100 seconds, the coefficient of dynamic friction to polystyrene was 5.2 and the probe tack value was 2.173 N (210 gf).

Comparative Example 3

(1) Production of Release Sheet

A release sheet was prepared in the same manner as in Example 1.

(2) Preparation of Self-Adhesive Agent Coating Solution

A self-adhesive agent coating solution was prepared in the same manner as in Example 1 except that 3 parts by weight of a cross-linking agent was blended per 100 parts by weight of the self-adhesive composition.

(3) Manufacture of Cleaning Sheet

A cleaning sheet was manufactured in the same manner as in Example 1 except that the release sheet prepared above was used. The smoothness on the surface of the self-adhesive layer obtained was 340 seconds, the coefficient of dynamic friction to polystyrene was 4.3 and the probe tack value was 2.010 N (205 gf).

Comparative Example 4

(1) Production of Release Sheet

A release sheet was prepared in the same manner as in Example 2.

(2) Preparation of Self-Adhesive Agent Coating Solution

A self-adhesive agent coating solution was prepared in the same manner as in Example 1 except that 20 parts by weight of a cross-linking agent was blended per 100 parts by weight of the self-adhesive composition.

(3) Manufacture of Cleaning Sheet

A cleaning sheet was manufactured in the same manner as in Example 1 except that the self-adhesive agent coating solution prepared above was used. The smoothness on the surface of the self-adhesive layer obtained was 1,900 seconds, the coefficient of dynamic friction to polystyrene was 3.0 and the probe tack value was 0.049 N (5 gf).

The constructions of cleaning sheets manufactured in Examples 1 to 6 and Comparative Examples 1 to 4 are shown in Table 1. The test results on the capability of cleaning sheets of Examples 1 to 6 and Comparative Examples 1 to 4 are shown in Table 2.

Table 1

| | Release Paper | | Self-Adhesive Agent | | | | | | | | | | |
| | Release Base Paper | Smoothness (sec) | Base of Self-Adhesive Agent | | | | | | Compounds Blended | | | Coating Method | Amount Coated, g/m² |
| | | | Polymerization Method | Composition | | | | | Cross-Linking Agent HMDI | Pigment PG-2 | Foaming Agent AR739 | | |
| | | | | 2-EHA | β-HEA | MMA | MAA | MAA | | | | | |
| Example 1 | direct base paper | 300 | solution polymerization | 98 | 2 | - | - | - | 7 | - | - | transfer method | 20 |
| Example 2 | laminate paper | 1880 | solution polymerization | 98 | 2 | - | - | - | 7 | - | - | transfer method | 20 |
| Example 3 | direct base paper | 300 | solution polymerization | 98 | 2 | - | - | - | 7 | - | - | direct method | 20 |
| Example 4 | direct base paper | 300 | emulsion polymerization | 66 | - | 3 | - | 1 | - | 30 | - | direct method | 20 |
| Example 5 | direct base paper | 300 | suspension polymerization | 98 | - | - | 2 | - | - | - | - | direct method | 10 |
| Example 6 | direct base paper | 300 | solution polymerization | 98 | 2 | - | - | - | 7 | - | 5 | transfer method | 20 |
| Comparative Example 1 | matted laminate paper | 40 | solution polymerization | 98 | 2 | - | - | - | 7 | - | - | transfer method | 20 |
| Comparative Example 2 | high-gloss laminate paper | 2050 | solution polymerization | 98 | 2 | - | - | - | 7 | - | - | transfer method | 20 |

(continued)

| | Release Paper | | Self-Adhesive Agent | | | | | | | | | | |
| | Release Base Paper | Smoothness (sec) | Base of Self-Adhesive Agent | | | | | | Compounds Blended | | | Coating Method | Amount Coated, g/m$^2$ |
| | | | Polymerization Method | Composition | | | | | Cross-Linking Agent HMDI | Pigment PG-2 | Foaming Agent AR739 | | |
| | | | | 2-EHA | β-HEA | MMA | MAA | MAA | | | | | |
| Comparative Example 3 | direct base paper | 300 | solution polymerization | 98 | 2 | - | - | - | 3 | - | - | transfer method | 20 |
| Comparative Example 4 | laminate paper | 1880 | solution polymerization | 98 | 2 | - | - | - | 20 | - | - | transfer method | 20 |

Table 2

| | Quality | | | | | |
|---|---|---|---|---|---|---|
| | Physical Properties | | | Utility | | |
| | Smoothness (sec) | Coefficient of Dynamic Friction with Polystyrene Film | Probe Tack N (gf) | Smooth Passing Property | Cleaning Property | General Evaluation |
| Example 1 | 320 | 3.0 | 0.294 (30) | O | O | O |
| Example 2 | 1950 | 4.8 | 0.686 (70) | Δ | O | Δ |
| Example 3 | 950 | 4.5 | 0.588 (60) | O | O | O |
| Example 4 | 70 | 2.1 | 0.245 (25) | O | Δ | Δ |
| Example 5 | 55 | 3.5 | 1.765 (180) | O | O | O |
| Example 6 | 50 | 3.5 | 0.539 (55) | O | O | O |
| Comparative Example 1 | 45 | 1.8 | 0.177 (18) | O | × | × |
| Comparative Example 2 | 2100 | 5.2 | 2.173 (210) | × | O | × |
| Comparative Example 3 | 340 | 4.3 | 2.010 (205) | × | O | × |
| Comparative Example 4 | 1900 | 3.0 | 0.049 (5) | O | × | × |

As is apparent from Tables 1 and 2, in the cleaning sheets of Examples 1 to 6, the probe tack value of the self-adhesive layer was from 0.196133 to 1.96133 N (20 to 200 gf), the smoothness on the self-adhesive layer surface was from 50 to 2,000 seconds and the coefficient of dynamic friction to polystyrene was 5 or less. Furthermore, these cleaning sheets (after the removal of release sheet) were excellent in the smooth passing property through a printer (running property) and the cleaning property.

In the cleaning sheet of Comparative Example 1, the self-adhesive layer was low in the probe tack value, smoothness and coefficient of dynamic friction, accordingly, the cleaning property was insufficient despite excellent smooth passing property through a printer (running property), thus, the practicability was low. In the cleaning sheet of Comparative Example 2, the smoothness on the self-adhesive layer surface and the probe tack value were excessively high, accordingly, the cleaning property was insufficient despite its excellent smooth passing property through a printer (running property), thus, this cleaning sheet was not suitable for the practical use. In the cleaning sheet of Comparative Example 3, the probe tack value of the self-adhesive layer was excessively high, accordingly, the smooth passing property through a printer (running property) was bad despite its excellent cleaning property, thus, this cleaning sheet was not suitable for the practical use. In the cleaning sheet of Comparative Example 4, the probe tack value of the self-adhesive layer was excessively low, accordingly, the cleaning property was bad, though the smooth passing property through a printer (running property) was excellent, and this cleaning sheet was not suitable for the practical use.

Industrial Applicability

The cleaning sheet of the present invention has excellent capability of removing paper dust, dirt and the like adhering to a rubber roller in the transportation means of a recording apparatus or an apparatus for treating a magnetic sheet or card. Moreover, the cleaning sheet of the present invention does not wind itself round a rubber roller (jamming) or, even when the self-adhesive layer of the cleaning sheet comes into contact with a fixing member such as a guide plate disposed in the transportation means, the self-adhesive layer does not adhere thereto to generate a problem such as paper jamming. Accordingly, the cleaning sheet of the present invention manufactured as above is very useful in practice.

**Claims**

1. A cleaning sheet comprising a substrate sheet, a self-adhesive layer having a low pressure-sensitive adhesive property formed on one surface of the substrate, and a release sheet laminated and detachably attached to the self-adhesive layer,
**characterized in that** the self-adhesive layer having a low pressure-sensitive adhesive property has:

   (1) a probe tack value of 0.196133 to 1.96133 N (20 to 200 gf), determined in accordance with JIS Z 0237, Information Reference, 5. Probe Tack Test, and/or
   (2) a smoothness of 50 to 2,000 seconds, determined in accordance with the Smoothness Testing Method set forth in JAPAN TAPPI Paper and Pulp Testing Method No. 5,
   and,
   (3) a coefficient of dynamic friction of 5 or less, determined in accordance with JIS P 8147, Testing Method of Dynamic Friction (using a weight having a working surface covered with a polystyrene film).

2. The cleaning sheet as claimed in claim 1, wherein the self-adhesive layer having a low pressure-sensitive adhesive property comprises a self-adhesive agent comprising at least one member selected from natural rubber, synthetic rubbers, silicone rubbers and polymers and copolymers of acrylate esters and methacrylate esters.

3. The cleaning sheet as claimed in claim 2, wherein the acrylate ester copolymer and the methacrylate ester copolymer each is selected from copolymers of:

   (a-1) one or more member selected from acrylate esters and methacrylate esters represented by the general formula: $CH_2=CR^2COOR^3$ (wherein $R^2$ represents a hydrogen atom or a $-CH_3$ group, and $R^3$ represents a straight or branched chain alkyl group having from 1 to 12 carbon atoms),
   with
   (a-2) one or more ethylenically unsaturated hydrocarbon monomer having at least one functional group selected from an amido group, substituted amido groups, an amino group, substituted amino groups, a carboxyl group, a hydroxyl group, an epoxy group, a mercapto group, and radical polymerizing unsaturated groups.

4. The cleaning sheet as claimed in claim 3, wherein the copolymerization weight ratio of the copolymerization component (a-1) to the copolymerization component (a-2) is from 50:50 to 99.1:0.1.

5. The cleaning sheet as claimed in claim 3, wherein the acrylate ester copolymer and the methacrylate ester copolymer each is selected from copolymers of the copolymerization component (a-1) and the copolymerization component (a-2) with (a-3) an addition-polymerizable unsaturated monomer different from the copolymerization components (a-1) and (a-2).

6. The cleaning sheet as claimed in claim 5, wherein the copolymerization weight of the copolymerization component (a-3) is 50% by weight or less, based on the total weight of the copolymerization components (a-1), (a-2) and (a-3).

7. The cleaning sheet as claimed in claim 2, wherein in the self-adhesive layer having a low pressure-sensitive adhesive property, the self-adhesive agent is cross-linked with a cross-linking agent comprising at least one member selected from isocyanate compounds, chelating oxazoline compounds, epoxy compounds, polycarbodiimide compounds and metal chelate compounds.

8. The cleaning sheet as claimed in claim 1, wherein the self-adhesive layer having a low pressure-sensitive adhesive property comprises a cross-linking reaction product of a copolymer which is prepared by the copolymerization of at least one member selected from acrylate esters and methacrylate esters with at least one ethylenically unsaturated hydrocarbon monomer having hydroxyl groups, and which has a weight average molecular weight (Mw) of 300,000 to 1,000,000, with a cross-linking agent comprising an isocyanate compound.

9. The cleaning sheet as claimed in claim 1, wherein a matting agent having an average particle size of 0.1 to 1,000 μm is dispersed and contained at least in the surface portion of the self-adhesive layer having a low pressure-sensitive adhesive property.

10. The cleaning sheet as claimed in claim 1, wherein the laminating surface of the release sheet facing the self-adhesive layer has a smoothness of 50 to 2,000 seconds; and the self-adhesive layer having a low pressure-sensitive adhesive property is formed on the laminating surface of the release sheet, and the substrate sheet is laminated on and adhered to the self-adhesive layer.

**Patentansprüche**

1. Reinigungspapier, umfassend ein Substratblatt, eine selbstklebende Schicht mit einer geringen Haftklebeeigenschaft, die auf einer Oberfläche des Substrats ausgebildet ist, und ein Trennblatt, das auf die selbstklebende Schicht laminiert und daran ablösbar angebracht ist,

   **dadurch gekennzeichnet, dass**
   die selbstklebende Schicht mit einer geringen Haftklebeeigenschaft Folgendes aufweist:

   (1) einen Haftfähigkeitswert von 0,196133 bis 1,96133 N (20 bis 200 gf), bestimmt gemäß dem JIS Z 0237, Informationsreferenz, 5. Haftfähigkeitstest, und/oder
   (2) eine Glätte von 50 bis 2000 Sekunden, bestimmt gemäß dem Glättetestverfahren, das dargelegt ist in JAPAN TAPPI Papier- und Zellstofftestverfahren Nr. 5, und
   (3) einen dynamischen Reibungskoeffizienten von 5 oder weniger, bestimmt gemäß dem JIS P 8147, Testverfahren der dynamischen Reibung (unter Verwendung eines Gewichts, das eine mit einem Polystyrolfilm bedeckte Arbeitsoberfläche aufweist).

2. Reinigungspapier nach Anspruch 1, wobei die selbstklebende Schicht mit einer geringen Haftklebeeigenschaft einen Haftklebstoff umfasst, der mindestens ein Mitglied umfasst, das ausgewählt ist aus Naturgummi, synthetischen Gummis, Silicongummis und Polymeren und Copolymeren von Acrylatestern und Methacrylatestern.

3. Reinigungspapier nach Anspruch 2, wobei das Acrylatestercopolymer und das Methacrylatestercopolymer jeweils ausgewählt sind aus Copolymeren von:

   (a-1) einem oder mehreren Mitgliedern, ausgewählt aus Acrylatestern und Methacrylatestern, die dargestellt werden durch die allgemeine Formel: $CH_2=CR^2COOR^3$ (wobei $R^2$ ein Wasserstoffatom oder eine $-CH_3$ Gruppe darstellt und $R^3$ eine geradkettige oder verzweigtkettige Alkylgruppe mit 1 bis 12 Kohlenstoffatomen darstellt), mit
   (a-2) einem oder mehreren ethylenisch ungesättigten Kohlenwasserstoffmonomer(en) mit mindestens einer funktionellen Gruppe, die ausgewählt ist aus einer Amidogruppe, substituierten Amidogruppe, einer Aminogruppe, substituierten Aminogruppe, einer Carboxylgruppe, einer Hydroxylgruppe, einer Epoxygruppe, einer Mercaptogruppe und radikalisch polymerisierenden ungesättigten Gruppen.

4. Reinigungspapier nach Anspruch 3, wobei das Copolymerisationsgewichtsverhältnis der Copolymerisationskomponente (a-1) zu der Copolymerisationskomponente (a-2) voin 50:50 bis 99,1:0,1 reicht.

5. Reinigungspapier nach Anspruch 3, wobei das Acrylatestercopolymer und das Methacrylatestercopolymer jeweils ausgewählt sind aus Copolymeren der Copolymerisationskomponente (a-1) und der Copolymerisationskomponente (a-2) mit (a-3) einem additionspolymerisierbaren ungesättigten Monomer, das von den Copolymerisationskomponenten (a-1) und (a-2) verschieden ist.

6. Reinigungspapier nach Anspruch 5, wobei das Copolymerisationsgewicht der Copolymerisationskomponente (a-3) 50 Gew.-% oder weniger beträgt, basierend auf dem Gesamtgewicht der Copolymerisationskomponenten (a-1), (a-2) und (a-3).

7. Reinigungspapier nach Anspruch 2, wobei in der selbstklebenden Schicht mit einer geringen Haftklebeeigenschaft der Haftklebstoff mit einem Vernetzungsmittel vernetzt ist, das mindestens ein Mitglied umfasst, ausgewählt aus Isocyanatverbindungen, chelatbildenden Oxazolinverbindungen, Epoxyverbindungen, Polycarbodiimidverbindungen und Metallchelatverbindungen.

8. Reinigungspapier nach Anspruch 1, wobei die selbstklebende Schicht mit einer geringen Haftklebeeigenschaft ein Vernetzungsreaktionsprodukt eines Copolymers umfasst, das hergestellt wird durch die Copolymerisation von mindestens einem Mitglied, ausgewählt aus Acrylatestern und Methacrylatestern mit mindestens einem ethylenisch ungesättigten Kohlenwasserstoffmonomer mit Hydroxylgruppen, und welches ein Gewichtsmittel des Molekulargewichts (Mw) von 300.000 bis 1.000.000 aufweist, mit einem Vernetzungsmittel, das eine Isocyanatverbindung umfasst.

**9.** Reinigungspapier nach Anspruch 1, wobei ein Mattierungsmittel mit einer mittleren Teilchengröße von 0,1 bis 1000 $\mu$m in zumindest dem Oberflächenabschnitt der selbstklebenden Schicht mit einer geringen Haftklebeeigenschaft dispergiert und enthalten ist.

**10.** Reinigungspapier nach Anspruch 1, wobei die Laminierungsoberfläche des Trennblattes, welche zur selbstklebenden Schicht hin ausgerichtet ist, eine Glätte von 50 bis 2000 Sekunden aufweist; und wobei die selbstklebende Schicht mit einer geringen Haftklebeeigenschaft auf der Laminierungsoberfläche des Trennblattes ausgebildet ist und das Substratblatt auf die selbstklebende Schicht laminiert ist und daran haftet.

**Revendications**

**1.** Feuille de nettoyage comprenant une feuille de substrat, une couche auto-adhésive ayant une faible propriété d'adhésif autocollant formée sur une surface du substrat, et une feuille de décollage stratifiée et attachée de manière détachable à la couche auto-adhésive,
**caractérisée en ce que** la couche auto-adhésive ayant une faible propriété d'adhésif autocollant a :

(1) une valeur de pégosité de sonde de 0,196133 à 1,96133 N (20 à 200 gf), déterminée selon la norme JIS Z 0237, Information Reference, 5. Probe Tack Test, et/ou
(2) un lissé de 50 à 2 000 secondes, déterminé selon la méthode d'essai de lissé présentée dans l'article du JAPAN TAPPI et la méthode d'essai de pâte n° 5,
et
(3) un coefficient de frottement dynamique de 5 ou moins, déterminé selon la norme JIS P 8147, méthode d'essai de frottement dynamique (utilisant une masse ayant une surface de travail recouverte d'un film en poly (styrène).

**2.** Feuille de nettoyage selon la revendication 1, dans laquelle la couche auto-adhésive ayant une faible propriété d'adhésif autocollant comprend un agent auto-adhésif comprenant au moins un élément choisi parmi le caoutchouc naturel, les caoutchoucs synthétiques, les caoutchouc de silicone et les polymères et copolymères d'ester acrylate et d'ester méthacrylate.

**3.** Feuille de nettoyage selon la revendication 2, dans laquelle le copolymère d'ester acrylate et le copolymère d'ester méthacrylate sont chacun choisis parmi les copolymères de :

(a-1) un ou plusieurs éléments choisis parmi les esters acrylates et les esters méthacrylates représentés par la formule générale : $CH_2=CR^2COOR^3$ (dans laquelle $R^2$ représente un atome d'hydrogène ou un groupe $-CH_3$, et $R^3$ représente un groupe alkyle à chaîne droite ou ramifiée ayant de 1 à 12 atomes de carbone), avec
(a-2) un ou plusieurs monomères hydrocarbonés éthyléniquement insaturés ayant au moins un groupe fonctionnel choisi parmi un groupe amido, les groupes amido substitués, un groupe amino, les groupes amino substitués, un groupe carboxyle, un groupe hydroxyle, un groupe époxy, un groupe mercapto et les groupes insaturés se polymérisant par radicaux libres.

**4.** Feuille de nettoyage selon la revendication 3, dans lequel le rapport en masse de copolymérisation du composé de copolymérisation (a-1) sur le composant de copolymérisation (a-2) est de 50 : 50 à 99,1 : 0,1.

**5.** Feuille de nettoyage selon la revendication 3, dans laquelle le copolymère d'ester acrylate et le copolymère d'ester méthacrylate sont chacun choisis parmi les copolymères du composant de copolymérisation (a-1) et du composant de copolymérisation (a-2) avec (a-3) un monomère insaturé polymérisable par addition différent des composants de copolymérisation (a-1) et (a-2).

**6.** Feuille de nettoyage selon la revendication 5, dans laquelle la masse de copolymérisation du composant de copolymérisation (a-3) est de 50 % en masse ou moins, sur la base de la masse totale des composants de copolymérisation (a-1), (a-2) et (a-3).

**7.** Feuille de nettoyage selon la revendication 2, dans laquelle, la couche auto-adhésive ayant une faible propriété d'adhésif autocollant, l'agent auto-adhésif est réticulé avec un agent de réticulation comprenant au moins un élément choisi parmi les composés isocyanates, les composés oxazoline chélatants, les composés époxy, les composés polycarbodiimide et les composés chélates de métal.

8. Feuille de nettoyage selon la revendication 1, dans laquelle la couche auto-adhésive ayant une faible propriété d'adhésif autocollant comprend un produit de réaction de réticulation d'un copolymère, qui est préparé par la copolymérisation d'au moins un élément choisi parmi les esters acrylates et les esters méthacrylates avec au moins un monomère hydrocarboné éthyléniquement insaturé ayant des groupes hydroxyle, et qui a une masse moléculaire moyenne en masse (Mw) de 300 000 à 1 000 000, avec un agent de réticulation comprenant un composé isocyanate.

9. Feuille de nettoyage selon la revendication 1, dans laquelle un agent de matité ayant une taille moyenne de particule de 0,1 à 1 000 $\mu$m est dispersé et contenu dans au moins la portion de surface de la couche auto-adhésive ayant une faible propriété d'adhésif autocollant.

10. Feuille de nettoyage selon la revendication 1, dans laquelle la surface de stratification de la feuille de décollage faisant face à la couche auto-adhésive a un lissé de 50 à 2 000 secondes ; et la couche auto-adhésive ayant une faible propriété d'adhésif autocollant est formée sur la surface de stratification de la feuille de décollage, et la feuille de substrat est stratifiée et mise à adhérer sur la couche auto-adhésive.